# EUROPÄISCHE PATENTANMELDUNG

(11) **EP 0 867 335 A2**
(43) Veröffentlichungstag der Anmeldung: **30.09.1998**
(21) Anmeldenummer: 98104562.8
(22) Anmeldetag: 13.03.1998
(51) Int. Cl.: B60P 1/64

(54) **Fahrzeug für den Transport von Wechselbehältern**

(30) Priorität: 26.03.1997 DE 29705469 U
(71) Anmelder: Gergen, Hans Georg, D-66386 St Ingbert (DE); Gergen, Engelbert, D-66583 Spiesen-Elversberg (DE); Gergen, Ottmar, D-66386 St Ingbert (DE)
(72) Erfinder: Gergen, Hans Georg, D-66386 St Ingbert (DE); Gergen, Engelbert, D-66583 Spiesen-Elversberg (DE); Gergen, Ottmar, D-66386 St Ingbert (DE)
(74) Vertreter: Vièl, Christof, Dipl.-Ing.

(57) **Zusammenfassung**

Die Erfindung betrifft ein Fahrzeug für den Transport von Wechselbehältern, wobei ein um den hinteren Bereich des Fahrgestellrahmens (1) kippbarer, mittig im Bereich der Fahrzeuglängsachse angeordneter und schwenkbarer Hakenarm (2) vorgesehen ist und wobei der Hakenarm (2) Lastaufnahmemittel (6) aufweist, die an einem Lastaufnahmemittel (11) eines Wechselbehälters (5) eingreifen können.

Aufgabe der Erfindung ist es, ein Fahrzeug für den Transport von Wechselbehältern zu schaffen, wobei ein um den hinteren Bereich des Fahrgestellrahmens (1') kippbarer, mittig im Bereich der Fahrzeuglängsachse angeordneter und schwenkbarer Hakenarm (2) vorgesehen ist und wobei der Hakenarm (2) Lastaufnahmemittel (6) aufweist, die an einem Lastaufnahmemittel (11) eines Wechselbehälters (5) eingreifen können, zu schaffen, mit dem Container gemäß DIN EN 284 transportiert und auch ab- und aufgeladen werden können.

Diese Aufgabe wird erfindungsgemäß dadurch gelöst, daß der schwenkbare Hakenarm (2) in seinem vorderen Bereich Querprofile aufweist, an denen Aufnahmemittel für einen Wechselbehälter (5) angeordnet sind.

## Beschreibung

Die Erfindung betrifft ein Fahrzeug für den Transport von Wechselbehältern, wobei ein um den hinteren Bereich des Fahrgestellrahmens kippbarer, mittig im Bereich der Fahrzeuglängsachse angeordneter und schwenkbarer Hakenarm vorgesehen ist und wobei der Hakenarm Lastaufnahmemittel aufweist, die an einem Lastaufnahmemittel eines Wechselbehälters eingreifen können.

Derartige Fahrzeuge sind bekannt und werden insbesondere zum Aufnehmen und Absetzen von Kippmulden, Silos etc. eingesetzt. Diese Wechselbehälter können über den Hakenarm aufgenommen und abgesetzt werden und über die Kippbrücke gekippt werden. Allerdings ist ein Transport von Containern (sogenannten "BDF-Containern") gemäß DIN EN 284 wie den oben beschriebenen mit Abrollkippern gemäß dem Oberbegriff bisher nicht möglich.

Fahrzeuge zum Transport von Wechselbehältern wie Containern sind bekannt und beispielsweise in der DIN-Norm 70 014 beschrieben. Sie dienen insbesondere zum Transport von Wechselbehältern gemäß DIN EN 284, die vier Greifkanten und einen sich über die ganze Länge des Wechselbehälters erstreckenden Zentriertunnel aufweisen. Diese Wechselbehälter werden beim Abstellen in der Regel angehoben, was über eine oder zwei Hubschwingen oder aber über eine Luftfederung des Fahrzeuges erfolgen kann, und dann auf an den Behältern angeordneten Stützbeinen abgestellt. Beim Aufnehmen wird der Behälter unterfahren, was durch den Zentriertunnel sowie eventuell Einweiserollen erleichtert wird, der Behälter angehoben, die Stützbeine hochgeklappt und der Behälter rastet auf den Aufnahmemitteln, z.B. Drehzapfen ein. Einen kippbaren Rahmen mit Hakenarm weisen diese Fahrzeuge jedoch nicht auf.

Die mit derartigen Fahrzeugen transportierten Behälter sind überwiegend Container, die beim Transport, dem Aufnehmen und dem Absetzen immer im wesentlichen horizontal angeordnet bleiben.

Aufgabe der Erfindung ist es somit, ein Fahrzeug für den Transport von Wechselbehältern, wobei ein um den hinteren Bereich des Fahrgestellrahmens kippbarer, mittig im Bereich der Fahrzeuglängsachse angeordneter und schwenkbarer Hakenarm vorgesehen ist und wobei der Hakenarm Lastaufnahmemittel aufweist, die an einem Lastaufnahmemittel eines Wechselbehälters eingreifen können, zu schaffen, mit dem Container gemäß DIN EN 284 transportiert und auch ab- und aufgeladen werden können.

Diese Aufgabe wird erfindungsgemäß dadurch gelöst, daß der schwenkbare Hakenarm in seinem vorderen Bereich Querprofile aufweist, an denen Aufnahmemittel für einen Wechselbehälter angeordnet sind.

Eine Ausbildung der Erfindung besteht darin, daß die Aufnahmemittel als Drehzapfen ausgebildet sind.

Es liegt im Rahmen der Erfindung, daß die Querprofile von dem Hakenarm aus schräg nach hinten angeordnet sind.

Eine weitere Ausbildung der Erfindung besteht darin, daß die Querprofile an dem Teil des Hakenarms, der im beladenen Zustand senkrecht steht, angeordnet sind.

Vorteilhaft ist auch, daß am hinteren Ende des Kipprahmens eine hydraulische Verriegelung für den Wechselbehälter vorgesehen ist.

Es liegt auch im Rahmen der Erfindung, daß im Bereich des hinteren Endes der Ladefläche zwei Ablaufrollen für das Aufnehmen und Absetzen des Wechselbehälters angeordnet sind.

Die Erfindung hat im wesentlichen den Vorteil, daß mit der erfindungsgemäßen Vorrichtung neben herkömmlichen Wechselbehältern auch Container gemäß DIN EN 284 transportiert, abgestellt, aufgenommen und gekippt werden können, was bisher nicht möglich war.

Im folgenden wird eine beispielhafte Ausbildung der Erfindung anhand von Zeichnungen erläutert. Es zeigen
- Fig. 1: eine Seitenansicht eines erfindungsgemäßen Fahrzeuges und eine Draufsicht auf den schwenkbaren Hakenarm,
- Fig. 2: eine Seitenansicht eines erfindungsgemäßen Fahrzeuges bei der Aufnahme eines auf Stützbeinen stehenden Wechselbehälters gemäß DIN EN 284,
- Fig. 3: eine Seitenansicht eines erfindungsgemäßen Fahrzeuges beim Transport/Kippen eines Wechselbehälters gemäß DIN EN 284,
- Fig. 4: eine Seitenansicht eines erfindungsgemäßen Fahrzeuges bei der Aufnahme eines auf dem Boden stehenden Wechselbehälters gemäß DIN 30722,
- Fig. 5: eine Seitenansicht eines erfindungsgemäßen Fahrzeuges beim Transport/Kippen eines Wechselbehälters gemäß DIN 30 722.

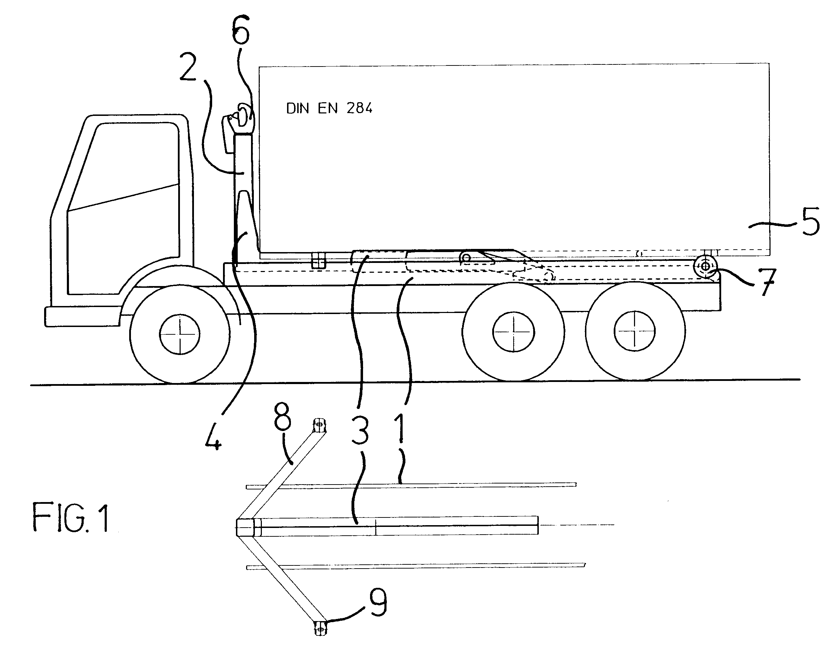

Das aus Fig. 1 ersichtliche Fahrzeug zum Transport von Wechselbehältern weist auf dem Fahrgestellrahmen 1 einen schwenkbaren, um den hinteren Bereich des Fahrgestellrahmens 1 kippbaren Hakenarm 2 auf. Dieser Hakenarm 2 weist einen im Fahrzustand parallel zur Ladefläche des Fahrzeuges angeordnetes Unterteil 3 und ein dazu in etwa senkrecht angeordnetes Oberteil 4 auf und umgibt somit den vorderen unteren Bereich sowie einen Teil des Vorderbereiches eines transportierten Wechselbehälters 5, hier eines Containers gemäß DIN EN 284. Das Oberteil 4 weist an seinem oberen Ende ein Lastaufnahmemittel 6, hier einen Haken auf. Am hinteren Ende der Ladefläche sind Rollen 7 zum Abrollen des Wechselbehälters angeordnet.

Erfindungsgemäß sind an dem Hakenarm zwei Querprofile 8 angeordnet, und zwar vorzugsweise an dem Oberteil 4 des Hakenarms, wie in Fig. 1 dargestellt. Diese beiden Querprofile 8 weisen an ihrem Ende Aufnahmemittel 9 für den Wechselbehälter 5 auf, die beispielsweise als Drehzapfen ausgebildet sein können. Auf diesen Aufnahmemitteln 9 können Wechselbehälter gemäß DIN EN 284 mit ihren vorderen Befestigungsbeschlägen ordnungsgemäß abgelegt werden.

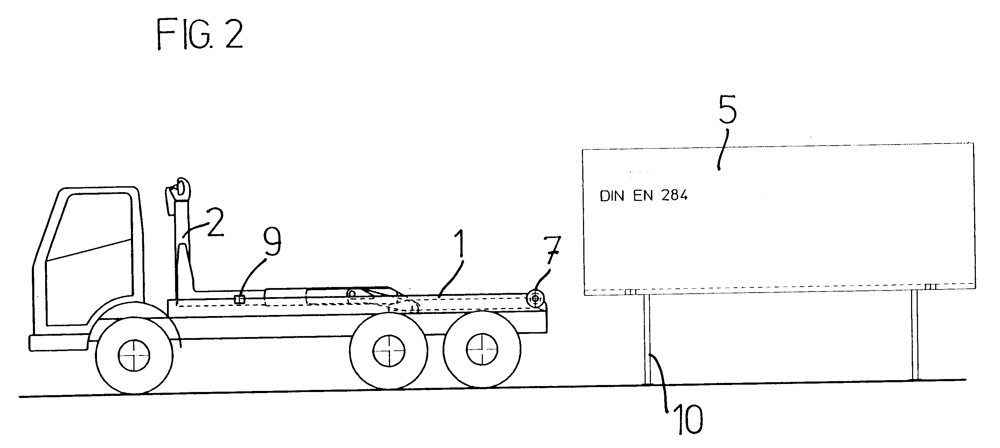

In Fig. 2 ist ein erfindungsgemäßes Fahrzeug bei der Aufnahme eines Wechselbehälters 5 gemäß DIN EN 284 dargestellt. Das Fahrzeug unterfährt den auf Stützbeinen 10 abgestellten Wechselbehälter 5, wobei eine Zentrierung des Wechselbehälters 5 auf der Ladefläche über den am Wechselbehälter 5 angeordneten Zentriertunnel sowie eventuell Einweiserollen erfolgt.

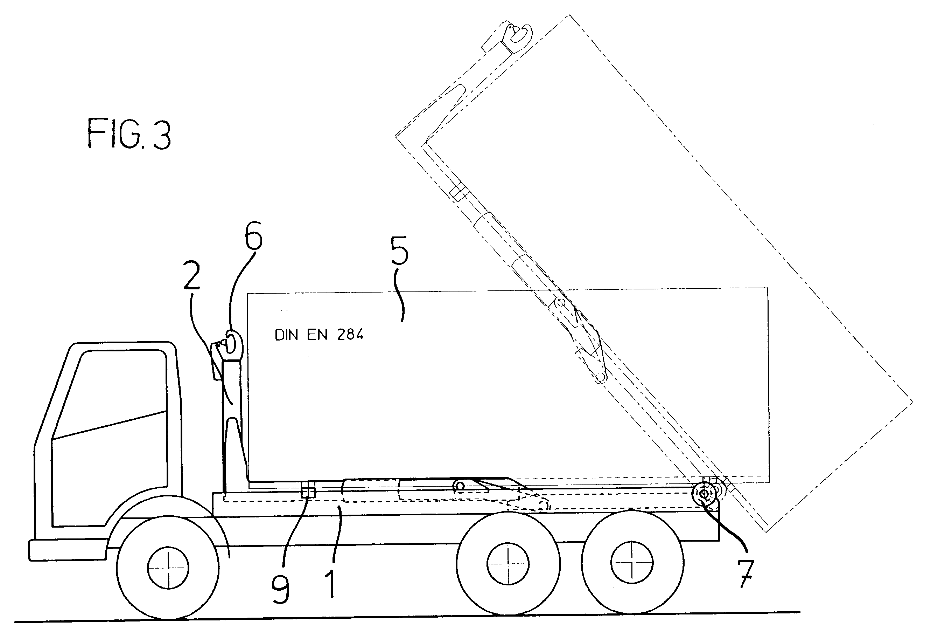

Fig. 3 zeigt das Fahrzeug beim Transport des aufgenommenen Wechselbehälters 5 gemäß DIN EN 284, wobei über den Eingriff der Aufnahmemittel 9 des Fahrzeuges in die Befestigungsbeschläge des Wechselbehälters 5 die Sicherung des Wechselbehälters 5 erfolgt. Beim ebenfalls dargestellten Kippen eines derartigen Wechselbehälters 5 wird dieser zweckmäßigerweise über eine hydraulische Verriegelung am hinteren Ende der Ladefläche gesichert.

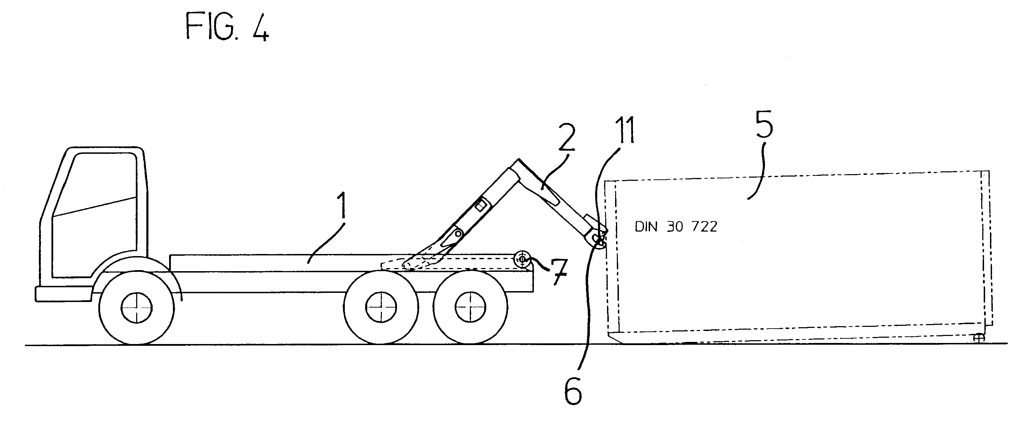

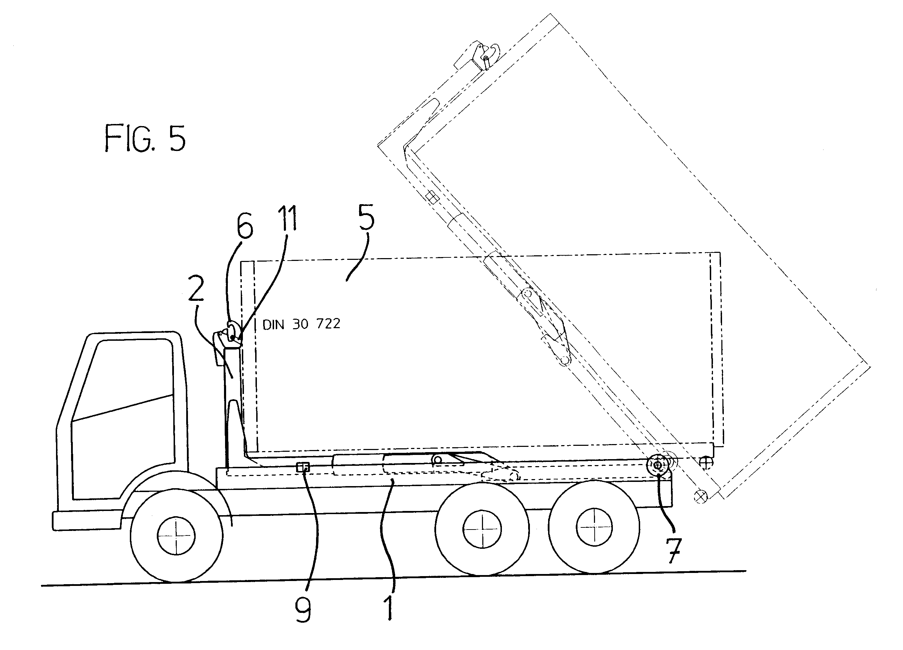

Mit dem erfindungsgemäßen Fahrzeug können ebenfalls Wechselbehälter 5 gemäß DIN 30722 aufgenommen, transportiert und gekippt werden, wie in den Fig. 4 und 5 dargestellt ist. Diese Wechselbehälter können mit dem Hakenarm 2 vom Boden aufgenommen und auf die Ladefläche gezogen werden, wobei vorteilhafterweise Rollen 7 am Ende der Ladefläche diese Aufnahme erleichtern. Bei derartigen Wechselbehältern 5 erfolgt das Aufnehmen (Fig. 4) und das Sichern während des Transportes und des Kippens (Fig. 5) über das Lastaufnahmemittel 6 am Hakenarm 2, das an entsprechenden Lastaufnahmemitteln 11 des Wechselbehälters 5 in Eingriff gebracht wird. Hier greift der Haken des Hakenarms 2 in einen Bügel des Wechselbehälters 5 ein.

## Patentansprüche

1. Fahrzeug für den Transport von Wechselbehältern, wobei ein um den hinteren Bereich des Fahrgestellrahmens kippbarer, mittig im Bereich der Fahrzeuglängsachse angeordneter und schwenkbarer Hakenarm vorgesehen ist und wobei der Hakenarm Lastaufnahmemittel aufweist, die an einem Lastaufnahmemittel eines Wechselbehälters eingreifen können, **dadurch gekennzeichnet**, daß der schwenkbare Hakenarm (2) in seinem vorderen Bereich Querprofile (8) aufweist, an denen Aufnahmemittel (9) für einen Wechselbehälter (5) angeordnet sind.

2. Fahrzeug gemäß Anspruch 1, **dadurch gekennzeichnet**, daß die Aufnahmemittel (9) als Drehzapfen ausgebildet sind.

3. Fahrzeug gemäß Anspruch 1, **dadurch gekennzeichnet**, daß die Querprofile (8) von dem Hakenarm (2) aus schräg nach hinten angeordnet sind und mit zusätzlichen Auflagen für den Grundrahmen des Wechselbehälters (5) versehen sind.

4. Fahrzeug gemäß Anspruch 1, **dadurch gekennzeichnet**, daß die Querprofile (8) an dem Teil des Hakenarms (2), der im beladenen Zustand senkrecht steht, angeordnet sind.

5. Fahrzeug gemäß Anspruch 1, **dadurch gekennzeichnet**, daß am hinteren Ende der Ladefläche eine hydraulische Verriegelung für den Wechselbehälter (5) vorgesehen ist.

6. Fahrzeug gemäß Anspruch 1, **dadurch gekennzeichnet**, daß im Bereich des hinteren Endes der Ladefläche (5) mindestens zwei Ablaufrollen (7) für das Aufnehmen und Absetzen des Wechselbehälters (5) angeordnet sind.

7. Fahrzeug gemäß Anspruch 1, **dadurch gekennzeichnet**, daß am hinteren und/oder vorderen Ende der Ladefläche Einweisrollen vorgesehen sind.

8. Fahrzeug gemäß Anspruch 7, **dadurch gekennzeichnet**, daß die Einweisrollen abnehmbar sind.
